# EUROPÄISCHE PATENTSCHRIFT

(11) **EP 1 937 962 B1**
(45) Veröffentlichungstag und Bekanntmachung des Hinweises auf die Patenterteilung: **30.11.2011**
(21) Anmeldenummer: 06805362.8
(22) Anmeldetag: 05.10.2006
(51) Int. Cl.: F02M 37/22

(54) **VERBRENNUNGSMOTOR, INSBESONDERE EINES KRAFTFAHRZEUGS, MIT EINER KRAFTSTOFFFILTEREINRICHTUNG**
INTERNAL COMBUSTION ENGINE IN PARTICULAR ON A MOTOR VEHICLE WITH A FUEL FILTER DEVICE
MOTEUR A COMBUSTION, NOTAMMENT D'UN VEHICULE, COMPORTANT UN SYSTEME DE FILTRE A CARBURANT

(30) Priorität: 17.10.2005 US 251997
(43) Veröffentlichungstag der Anmeldung: 02.07.2008
(73) Patentinhaber: Mahle International GmbH, 70376 Stuttgart (DE)
(72) Erfinder: JENSEN, Hans, West Bloomfield, Michigan 48322 (US); LIKA, Torsten, 70197 Stuttgart (DE); STACHL, Jürgen, Walled Lake, Michigan 48390 (US)
(74) Vertreter: BRP Renaud & Partner
(86) Internationale Anmeldenummer: PCT/DE2006/001742
(87) Internationale Veröffentlichungsnummer: WO 2007/045206

(56) Entgegenhaltungen:
- US-A- 5 846 417
- US-A- 5 855 780
- US-A1- 2003 000 882
- US-A1- 2005 072 721

## Beschreibung

### Hintergrund der Erfindung

Die Erfindung betrifft einen Verbrennungsmotor, insbesondere eines Kraftfahrzeugs, mit einer Kraftstofffiltereinrichtung nach dem Oberbegriff des Patentanspruchs 1.

Aus DE 103 29 199 A1 und DE 103 41 054 A1 sind Verbrennungsmotoren mit Schmierölfiltern bekannt, die mit jeweils zwei austauschbaren Filterelementen, nämlich einem Haupt- und einem Nebenstromfilter in einem teilbaren Filtergehäuse versehen sind. Bei diesen Filtern sind Mittel vorgesehen, durch die dieses Schmierölfilter auch bei einem versehentlich fehlenden Nebenstromfilter durch Unterbrechung des Nebenstromweges noch einen funktionsfähigen Motorbetrieb sicherstellen. Damit wird bei diesen bekannten Filtereinrichtungen bei einem fehlenden Nebenstromfilter ein Motorbetrieb nicht zwangsweise verhindert, sondern vielmehr bewusst aufrecht erhalten. Ein Verbrennungsmotor mit einer solchen Schmieröleinrichtung kann insbesondere ungehindert gestartet und danach weiter betrieben werden.

Aus der US 2005/072721 A1 ist eine Kraftstofffiltereinrichtung mit einem Filtergehäuse und einem in diesem Filtergehäuse angeordneten ringförmigen Filterkörper bekannt. Befindet sich der Filterkörper in eingebautem Zustand, so drückt er eine federgespannte Konsole nieder, welche in niedergedrücktem Zustand eine Durchgangsöffnung freigibt. Die Durchgangsöffnung verbindet dabei eine Reinseite der Filtereinrichtung mit einem Ablauf. Wird der Filterkörper aus dem Filtergehäuse entnommen, so bewegt sich die federgespannte Konsole entlang eines zentral angeordneten Rohres, bis sie mit einem Mantelabschnitt die Durchgangsöffnung überdeckt und damit geschlossen hat.

Aus der US 2003/0000882 A1 ist ebenfalls eine Filtereinrichtung mit einem darin angeordneten, ringförmigen Filterkörper bekannt. Bei korrekt angeordnetem Filterkörper, wird von einem Deckel der Filtereinrichtung eine Endscheibe des Filterkörpers belastet, welche andererseits an einem Ventil anliegt und dieses öffnet. Bei fehlendem Filterkörper erfolgt eine derartige Ventilbetätigung nicht, wodurch ein Kraftstofffluss unterbrochen ist.

Aus der US 5,846,417 ist eine Filtereinrichtung bekannt, bei welcher bei eingesetztem Filterkörper von einer Endscheibe des Filterkörpers ein Ventil in dessen Öffnungsstellung gedrückt wird, während bei fehlendem Filterkörper das Ventil aufgrund einer Federbelastung in dessen Schließstellung gespannt wird, so dass der Kraftstofffluss unterbrochen ist.

Aus der US 5,855,780 ist eine Filtereinrichtung bekannt, welche ebenfalls nur bei einem eingesetzten Filterkörper ein Ventil öffnet und dadurch einen Kraftstofffluss ermöglicht.

### Offenbarung der Erfindung

Die Erfindung beschäftigt sich mit dem Problem, bei einem Verbrennungsmotor mit einer Kraftstoff-Filtereinrichtung sicherzustellen, dass ein Betrieb dieses Motors ausschließlich mit Kraftstoff in einer gefilterten Qualität möglich ist.

Gelöst wird dieses Problem bei einem gattungsgemäßen Verbrennungsmotor durch eine Ausführung nach dem kennzeichnenden Merkmal des Patentanspruchs 1.

Zweckmäßige und vorteilhafte Ausgestaltungen und zwar insbesondere der Filtereinrichtung sind Gegenstand der Unteransprüche.

Die Erfindung beruht auf dem allgemeinen Gedanken, zu verhindern, dass ein gattungsgemäßer Verbrennungsmotor ohne gereinigten Kraftstoff betrieben werden kann. So soll insbesondere eine Filtereinrichtung in der Form eines Kraftstofffilters nicht von Kraftstoff durchströmt werden können, wenn sich in dem Inneren des Filtergehäuses kein Filterelement befindet. Ein Zustand, bei dem in einem Kraftstofffilter kein Filterelement vorhanden ist, kann beispielsweise eintreten, wenn bei einer Wartung des Filters das verbrauchte Filterelement entnommen, jedoch das Filtergehäuse danach ohne Einsatz eines Ersatzfilterelementes versehentlich oder bewusst, weil kein Austauschfilter einsetzbar war, wieder geschlossen worden ist. Eine Kraftstoffstromunterbrechung innerhalb des Filtergehäuses wird erfindungsgemäß dadurch erreicht, dass ein Ventil vorgesehen ist, welches Betätigungsmittel aufweist, die von dem Filterelement betätigt werden. Die Betätigung ist dabei zwangsweise und erfolgt derart, dass das Ventil bei eingesetztem Filterelement geöffnet und bei fehlendem Filterelement verschlossen ist. Eine bevorzugte Ventilausbildung besteht in einem Rohrschieber-Ventil, bei dem die Lage des Schiebers durch die Lage bzw. das Fehlen eines Filterelementes bestimmt wird.

### Beschreibung eines gezeichneten Ausführungsbeispieles

Ein nachstehend näher erläutertes Ausführungsbeispiel ist in schematischer Form in der Zeichnung dargestellt.

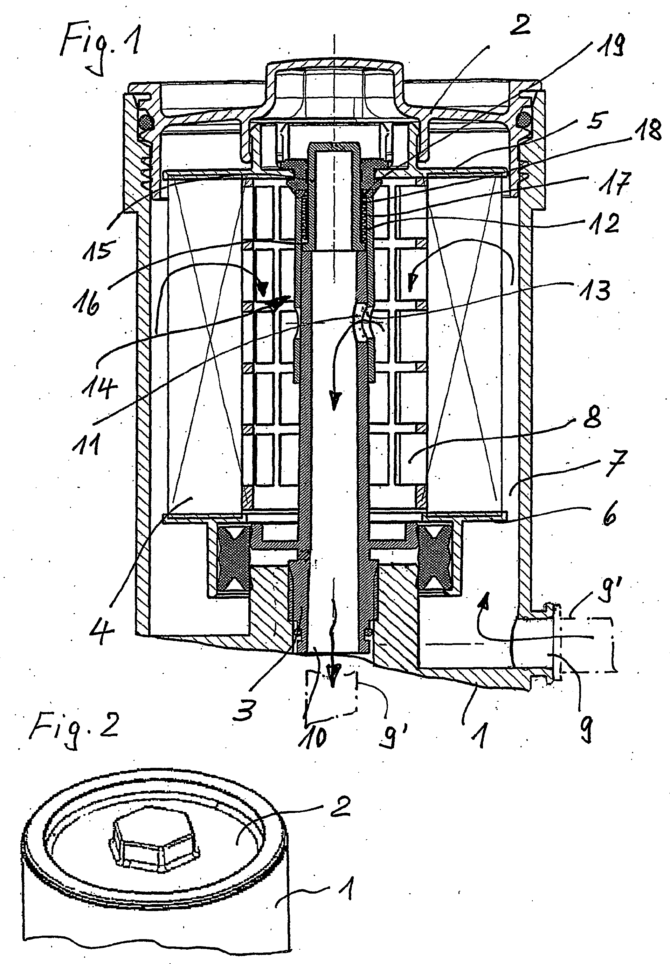

In dieser zeigen
- Fig. 1: einen Längsschnitt durch ein Kraftstofffilter mit einem austauschbaren Ringfilterelement in einem teilbaren, einenends abgeschnitten gezeichneten Filtergehäuse,
- Fig. 2: eine perspektivische Ansicht des Kraftstofffilters von oben bei einer lediglich ausschnittsweisen Darstellung des oberen Filtergehäusebereiches.

Bei einem Kraftstofffilter mit einem teilbaren Filtergehäuse, nämlich einem Gehäuseunterteil 1 und einem Gehäuseoberteil 2 ist für einen Austausch bei geöffnetem Filtergehäuse auf einem in dem Gehäuseunterteil 1 von unten nach oben ragenden Standrohr 3 ein Ring-Filterelement 4 austauschbar gelagert. Das teilbare Filtergehäuse besitzt insgesamt eine zylindrische Form, wozu die beiden Gehäuseteile 1 und 2 entsprechend ausgebildet sind. Das Ring-Filterelement 4 ist zentrisch in dem Inneren des Filtergehäuses gelagert.

Das Filterelement 4 besitzt an seinen Stirnseiten ringförmige Endscheiben, nämlich eine obere Endscheibe 5 sowie eine untere Endscheibe 6. Radial innen sind diese Endscheiben 5, 6 gegenüber dem Standrohr 3 gedichtet.

Durch das Filterelement 4 wird der Innenraum des Filtergehäuses in einen Rohraum 7 sowie einen Reinraum 8 getrennt. In den Rohraum 7 führt aus einer Kraftstoffleitung 9' ein Zuführkanal 9 für in das Filter einzuführenden und dort zu reinigenden Kraftstoff eines Verbrennungsmotors. Der Abfluss des Kraftstoffes erfolgt durch das zu diesem Zweck über den größten Teil seiner von unten ausgehenden Länge hohl ausgeführte Standrohr 3. Dabei bildet das untere Ende des Standrohres 3 einen nach außerhalb des Filters führenden Abführkanal 10. Damit gefilterter Kraftstoff aus dem Reinraum 8 zwischen dem Filterelement 2 und dem Standrohr 3 durch das Standrohr abfließen kann, befindet sich in dem Standrohr 3 in einem Abstand vom unteren Ende des Gehäuseunterteiles 1 eine radiale Öffnung 11. Die Durchströmbarkeit des Kraftstofffilters ist in der Zeichnung mit Strömungspfeilen angedeutet.

Die radiale Öffnung 11 ist Bestandteil eines Ventiles 14 mit einem außen längs des Standrohres 3 verschiebbar gelagerten Rohrschiebers 12. Dieser Rohrschieber 12 ist mit einer radialen Rohrschieber-Öffnung 13 versehen. Bei geöffnetem Zustand des Rohrschieber-Ventiles 14 sind die radiale Öffnung 11 des Standrohres 3 und die radiale Rohrschieberöffnung 13 fluchtend zueinander ausgerichtet und ermöglichen damit einen Durchfluss. Bei geschlossenem Zustand des Rohrschieber-Ventiles 14 versperrt ein geschlossener Bereich des Rohrschiebers 12 die radiale Öffnung 11 des Standrohres 3. Das Öffnen und Schließen des Rohrschieber-Ventiles 14 erfolgt durch eine Längsverschiebung des Rohrschiebers 12 auf dem Standrohr 3. Das Rohrschieber-Ventil 14 wird betätigt durch das Filterelement 4 und zwar über deren obere Endscheibe 5. Die Betätigung erfolgt derart, dass das Rohrschieber-Ventil 14 bei einem in das Filtergehäuse eingesetzten Filterelement 4 geöffnet und bei einem in dem Filtergehäuse fehlenden Filterelement 4 geschlossen ist. Erreicht wird diese Funktion durch folgende Ausbildung.

Das Standrohr 3 besitzt in einem oberen Bereich 15 einen gegenüber dem unteren Bereich geringeren Durchmesser, wodurch sich zwischen oberem Bereich 15 und unterem Bereich eine Ringstufe 16 ausbildet. Der Rohrschieber 12 wird derart auf das Standrohr 3 aufgesetzt, dass er mit seiner radialen Öffnung 13 innerhalb des unteren Bereiches des Standrohres liegt und sich mit einem oberen Bereich in den oberen Bereich 15 des Standrohres 3 erstreckt. Hierdurch bildet sich zwischen dem oberen Bereich 15 des Standrohres 3 und dem oberen Bereich des Rohrschiebers 12 ein Ringspalt 17 aus. In diesen Ringspalt 17 ist eine zylindrische Spiral-Feder 18 eingesetzt, die sich auf der Ringstufe 16 als einem stirnseitigen Widerlager abstützt. Anderenends stützt sich diese Spiral-Feder 18 an einem an der oberen Stirnseite des Rohrschiebers 12 in den Ringspalt 17 ragenden Ringbund 19 ab.

Bei eingesetztem Filterelement 4 liegt die obere Endscheibe 5 direkt an der oberen Stirnseite, das heißt an dem Ringbund 19 des Rohrschiebers 12 an. Dadurch drückt ein eingesetztes Filterelement 4 den Rohrschieber 12 nach unten in eine Position, bei der die radialen Öffnungen 11 und 13 des Standrohres 3 bzw. des Rohrschiebers 12 fluchten und damit einen Kraftstoffdurchfluss erlauben. Bei fehlendem Filterelement 4 innerhalb des Filtergehäuses entspannt sich die Spiral-Feder 18 und verschiebt den Rohrschieber 12 hierdurch in eine Position, in der er die radiale Öffnung 11 des Standrohres 3 verschließt. Das Rohrschieber-Ventil 14 muss erfindungsgemäß lediglich in einem solchen Maße schließen, das heißt den Kraftstoffdurchfluss durch das Filter verhindern, das der zugehörige Verbrennungsmotor nicht funktionsfähig ist. Hierdurch merkt der Betreiber des Verbrennungsmotores das etwas bei der Kraftstoffzufuhr nicht stimmen kann und wird hierdurch zwangsläufig auf ein innerhalb des Kraftstofffilters fehlendes Filterelement 4 aufmerksam.

Bei dem vorstehend beschriebenen Ausführungsbeispiel ist ein federbelastetes Ventil 14 eingesetzt. Durch die Federbelastung schließt dieses Ventil 14 bei fehlendem Filterelement 4, während es durch Spannen der Feder 18 bei eingesetztem Filterelement 4 offengehalten wird. Anstelle eines derart betätigt federbelasteten Ventiles 14 kann auch ein solches auch dadurch betätigt werden, dass es bei Fehlen eines Filterelementes 4 innerhalb des Kraftstofffilters durch unter Betriebsdruck in das Filter einströmenden Kraftstoff geschlossen wird. In diesem Fall verschließt ein eingesetztes Filterelement 4 eine Zuströmöffnung in einen Druckraum, in dem der unter Betriebsdruck stehende Kraftstoff durch Spannen einer Feder 18 das Ventil 14 verschließt. Fehlt der betreffende Betriebsdruck innerhalb dieses Druckraumes, indem der Zufluss durch ein eingesetztes Filterelement 4 versperrt ist, fehlt die der Feder 18 entgegenwirkende Spannkraft und das Ventil 14 öffnet federkraftbedingt.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Kraftstoff-Filtereinrichtung in einer zu dem Verbrennungsmotor führenden Kraftstoffleitung, in welcher ein Ventil (14) vorgesehen ist, das bei ungefiltertem Kraftstoff ein Starten des Verbrennungsmotors verhindert, wobei das Ventil (14) bei Vorhandensein eines Filterelementes (4) innerhalb des Filtergehäuses durch die Lage des Filterelementes (4) geöffnet und bei fehlendem Filterelement (4) bei zumindest unter aktivem Filterbetriebsdruck an der Filtergehäuse-Kraftstoffzuflussöffnung (9) anstehendem Kraftstoffdruck geschlossen ist, wobei
- das teilbare Filtergehäuse aus einem topfförmigen Gehäuseunterteil (1) mit einer dessen Boden gegenüber liegenden Öffnung sowie einem diese Öffnung in betriebsbereitem Zustand verschließbaren Deckel in der Form eines Gehäuseoberteiles (2) besteht,
- in dem Gehäuseunterteil (1) von dessen Boden zu der vorgenannten Öffnung ein innen hohles Standrohr (3) ragt,
- das Standrohr (3) in dem Filterelement (4) gereinigten Kraftstoff nach außerhalb des Filtergehäuses ableitet,
- das Standrohr in dem Reinraum (8) des Filters eine radiale Öffnung (11) besitzt,
- an dem Standrohr (3) ein Rohrschieber (12) als Bestandteil eines Rohrschieber-Ventiles (14) verschiebbar gelagert ist,
- der Rohrschieber (12) eine radiale Öffnung (13) besitzt, die bei einer entsprechenden Schiebestellung des Rohrschiebers (12) gegenüber dem Standrohr (3) mit dessen radialer Öffnung (11) fluchtet,
- der Rohrschieber (12), je nachdem, ob sich in dem Filtergehäuse ein Filterelement (4) befindet oder nicht, unterschiedliche Positionen gegenüber dem Standrohr (3) einnimmt, nämlich eine erste Position bei einem eingesetzten und eine zweite Position bei einem fehlenden Filterelement (4),
- in der ersten Position ein Kraftstoffdurchfluss durch die fluchtenden, zueinander ausgerichteten, radialen Öffnungen (11, 13) von Standrohr (3) und Rohrschieber (12) möglich ist, während dies in der zweiten Position nicht möglich ist,
**dadurch gekennzeichnet, dass**
- der Rohrschieber (12) außen längs des Standrohres (3) verschiebbar gelagert ist,
- das Standrohr (3) in einem oberen Bereich (15) einen gegenüber dem unteren Bereich geringeren Durchmesser besitzt, wodurch sich zwischen oberem Bereich (15) und unterem Bereich eine Ringstufe (16) ausbildet,
- der Rohrschieber (12) mit seiner radialen Öffnung (13) innerhalb des unteren Bereiches des Standrohres (3) liegt und sich mit einem oberen Bereich in den oberen Bereich (15) des Standrohres (3) erstreckt, wodurch sich zwischen dem oberen Bereich (15) des Standrohres (3) und dem oberen Bereich des Rohrschiebers (12) ein Ringspalt (17) ausbildet, in welchem eine zylindrische Spiral-Feder (18) eingesetzt, die sich einenends auf der Ringstufe (16) als einem stirnseitigen Widerlager und onderenends an einem an der oberen Stirnseite des Rohrschiebers (12) in den Ringspalt (17) ragenden Ringbund (19) abstützt.

2. Kraftstoff-Filtereinrichtung nach Anspruch 1,
**dadurch gekennzeichnet,**
**dass** das Filterelement (4) durch die vorgenannte Öffnung des Gehäuseunterteiles (1) hindurch austauschbar ist.

## Claims

1. Fuel filter system in a fuel line leading to the internal combustion engine, in which a valve (14) is provided which prevents the internal combustion engine from being started with unfiltered fuel, wherein the valve (14) is opened due to the position of the filter element (4) when a filter element (4) is present inside the filter housing, and when there is no filter element (4), the valve is closed with fuel pressure applied to the filter housing fuel inlet opening (9) at least under active filter operating pressure, wherein
- the divisible filter housing consists of a pot-shaped housing bottom part (1) having an opening opposite its bottom and a cover in the form of a housing top part (2) which can close this opening when in an operation-ready state,
- in the housing bottom part (1) a stand pipe (3), which is hollow on the inside, protrudes from the bottom thereof to the aforementioned opening,
- the stand pipe (3) directs fuel that has been purified in the filter element (4) to the outside of the filter housing,
- the stand pipe has a radial opening (11) in the clean chamber (8) of the filter,
- a pipe slide (12) is displaceably mounted on the stand pipe (3) as a component of a pipe slide valve (14),
- the pipe slide (12) has a radial opening (13) which is aligned with the radial opening (11) of the stand pipe in a corresponding displacement position of the pipe slide (12) with respect to the stand pipe (3),
- the pipe slide (12) assumes different positions with respect to the stand pipe (3), depending on whether or not there is a filter element (4) in the filter housing, namely a first position when a filter element (4) is inserted and a second position when there is no filter element,
- in the first position it is possible for fuel to flow from the stand pipe (3) and the pipe slide (12) through the radial openings (11, 13) that are aligned and flush with one another, whereas this is not possible in the second position,
**characterized in that**
- the pipe slide (12) is displaceably mounted externally along the stand pipe (3),
- the stand pipe (3) has a smaller diameter in an upper region (15) compared with the lower region, whereby an annular step (16) is formed between the upper region (15) and the lower region,
- the pipe slide (12) lies with its radial opening (13) inside the lower region of the stand pipe (3) and extends with an upper region into the upper region (15) of the stand pipe (3), whereby between the upper region (15) of the stand pipe (3) and the upper region of the pipe slide (12) an annular gap (17) is formed, in which a cylindrical spiral spring (18) is inserted, which rests at one end on the annular step (16) as an end-face abutment and rests at the other end on an annular collar (19) projecting into the annular gap (17) on the upper end face of the pipe slide (12).

2. Fuel filter system according to claim 1,
**characterized in that**
the filter element (4) is able to be exchanged through the aforementioned opening of the housing bottom part (1).

## Revendications

1. Dispositif de filtrage de carburant dans une conduite de carburant menant au moteur à combustion interne, dans lequel une soupape (14) est prévue, qui empêche en cas de carburant non filtré un démarrage du moteur à combustion interne, dans lequel la soupape (14) est ouverte en présence d'un élément de filtrage (4) à l'intérieur du logement de filtre par la position de l'élément de filtrage (4) et est fermée en cas d'élément de filtrage (4) manquant à au moins une pression de carburant générée sous une pression de fonctionnement de filtre active sur l'ouverture d'admission de carburant dans le logement de filtre (9), dans lequel
- le logement de filtre divisible est constitué d'une partie inférieure de logement (1) en forme de pot avec une ouverture située en vis-à-vis de sa base ainsi qu'un couvercle pouvant obturer cette ouverture en l'état prêt à fonctionner sous forme d'une partie supérieure de logement (2),
- dans la partie inférieure de logement (1) à partir de la base de celle-ci vers l'ouverture précédemment mentionnée saille une colonne montante (3) intérieure creuse,
- la colonne montante (3) dévie dans l'élément de filtrage (4) du carburant purifié vers l'extérieur du logement de filtre,
- la colonne montante possède dans l'espace purifié (8) du filtre une ouverture radiale (11),
- sur la colonne montante (3) est positionné de manière déplaçable un robinet à obturateur tubulaire (12) étant partie intégrante d'une soupape à robinet à obturateur tubulaire (14),
- le robinet à obturateur tubulaire (12) possède une ouverture radiale (13), qui s'aligne à une position de déplacement correspondante du robinet à obturateur tubulaire (12) par rapport à la colonne montante (3) avec l'ouverture radiale (11) de celle-ci,
- le robinet à obturateur tubulaire (12), selon qu'il se trouve ou pas un élément de filtrage (4) dans le logement de filtre, adopte des positions différentes par rapport à la colonne montante (3), à savoir une première position quand un élément de filtrage est présent et une deuxième position quand un élément de filtrage (4) est absent,
- dans la première position un flux de carburant à travers les ouvertures radiales (11,13) en alignement, orientées les unes par rapport aux autres de la colonne montante (3) et du robinet à obturateur tubulaire (12) est possible, alors que ceci n'est pas possible dans la deuxième position,
**caractérisé en ce que**
- le robinet à obturateur tubulaire (12) est positionné de manière déplaçable à l'extérieur le long de la colonne montante (3),
- la colonne montante (3) possède dans une zone supérieure (15) un diamètre moindre comparé à la zone inférieure, moyennant quoi un gradin annulaire (16) est réalisé entre la zone supérieure (15) et la zone inférieure,
- le robinet à obturateur tubulaire (12) est situé avec son ouverture radiale (13) à l'intérieur de la zone inférieure de la colonne montante (3) et s'étend par une zone supérieure dans la zone supérieure (15) de la colonne montante (3), moyennant quoi entre la zone supérieure (15) de la colonne montante (3) et la zone supérieure du robinet à obturateur tubulaire (12) une fente annulaire (17) est réalisée, dans laquelle un ressort en spirale cylindrique (18) est inséré, qui s'appuie à une extrémité sur le gradin annulaire (16) comme une contre-butée de côté frontal et à une autre extrémité sur un collier annulaire (19) saillant sur le côté frontal supérieur du robinet à obturateur tubulaire (12) dans la fente annulaire (17).

2. Dispositif de filtrage de carburant selon la revendication 1,
**caractérisé en ce que**
l'élément de filtrage (4) peut être remplacé à travers l'ouverture précédemment mentionnée de la partie inférieure du logement (1).
